# EUROPÄISCHE PATENTANMELDUNG

(11) **EP 1 627 792 A2**
(43) Veröffentlichungstag der Anmeldung: **22.02.2006**
(21) Anmeldenummer: 05017690.8
(22) Anmeldetag: 13.08.2005
(51) Int. Cl.: B62B 1/12

(54) **Golfwagen**

(30) Priorität: 21.08.2004 DE 102004040639
(71) Anmelder: Bayerische Motoren Werke Aktiengesellschaft, 80809 München (DE)
(72) Erfinder: Leibold, Paul, 82541 Münsing-Ambach (DE); Graf von Saurma, Nikolaus, 80799 München (DE)

(57) **Zusammenfassung**

Ein Golfwagen (1) weist drei Rahmenteile (2, 3, 4) auf, die teleskopartig ineinander schiebbar sind. Zwischen dem mittleren und dem unteren Rahmenteil (3 bzw. 4) ist eine Gasfeder (15) angeordnet. Der erfindungsgemäße Golfwagen (1) kann in besonders einfacher Weise durch eine lineare Einschubbewegung aus seiner Gebrauchslage in seine Nichtgebrauchslage überführt werden. Durch die Gasfeder (15) wird die Ausfahrbewegung des mittleren Rahmenteils (3) unterstützt, so dass sich eine besonders komfortable Handhabung ergibt.

## Beschreibung

Die Erfindung betrifft einen Golfwagen nach dem Oberbegriff des Anspruchs 1.

Aus der DE 93 08 808 U1 ist ein derartiger Golfwagen bekannt, bei dem zum Überführen aus der Gebrauchslage in die Nichtgebrauchslage zunächst das obere und das mittlere Rahmenteil ineinander geschoben werden, um anschließend eine Klappung der Einheit aus oberen und mittlerem Rahmenteil hin zum unteren Rahmenteil vorzunehmen.

Aufgabe der Erfindung ist es, den bekannten Golfwagen weiter zu entwickeln, um insgesamt ein verbessertes Überführen aus der Gebrauchslage in die Nichtgebrauchslage zu erreichen.

Diese Aufgabe wird durch einen Golfwagen mit den Merkmalen des Anspruches 1 erreicht.

Kerngedanke ist es dabei, das mittlere und das untere Rahmenteil so zu gestalten, dass die beiden Rahmenteile teleskopartig ineinander geschoben werden können. Dadurch ergibt sich gegenüber dem aus der DE 93 08 808 U1 bekannten Golfwagen ein verbesserter Bewegungsablauf beim Überführen von der Gebrauchslage in die Nichtgebrauchslage und umgekehrt, da eine einheitliche Bewegungsrichtung, nämlich ausschließlich eine translatorische Bewegung in Richtung der Längsachse der drei Rahmenteile, vorliegt.

Mit dem erfindungsgemäßen Golfwagen ist durch die lineare Einschubbewegung eine "Einhandbedienung" möglich, um den am Boden stehenden Golfwagen in die Nichtgebrauchslage zu überführen. Auch das umgekehrte Überführen des Golfwagens von seiner Nichtgebrauchslage in die Gebrauchslage kann mit einer Hand erfolgen, da hierzu ebenfalls nur eine lineare Ausziehbewegung erforderlich ist. Außerdem lassen sich mit dem erfindungsgemäßen Golfwagen durch die teleskopische Anordnung der drei Rahmenteile sehr kompakte Abmessungen in der Nichtgebrauchslage erzielen.

Wie an sich bekannt, wird in einer bevorzugten Ausführungsform der Erfindung wenigstens eines der Rahmenteile von einem Strangprofil gebildet.

Gemäß einer Ausgestaltung der Erfindung ist das mittlere Rahmenteil ein Strangprofil mit einem geschlossenen Querschnitt, in das das obere Rahmenteil eingesetzt ist. Außerdem bietet das mittlere Rahmenteil durch seinen geschlossenen Querschnitt eine stabile Abstützbasis gegenüber dem unteren Rahmenteil.

In besonders vorteilhafter Weise kann die Ausschubbewegung zwischen mittlerem und unterem Rahmenteil durch eine Gasfeder unterstützt werden, die im zusammen geschobenen Zustand eine Druckkraft im Sinn des Auseinanderbewegens der beiden Rahmenteile erzeugt, wie an sich aus der DE 88 00 831 U1 bekannt. Diese Druckkraft muss zwar beim Zusammenschieben von mittlerem und unterem Rahmenteil überwunden werden, was jedoch keine Schwierigkeiten bereitet, da sich der Golfwagen hierbei am Boden abstützt und die Druckkraft nur geradlinig in Längsrichtung der Rahmenteile aufzubringen ist.

Im Gegenzug wird durch die Gasdruckfeder erreicht, dass beim Überführen von der Nichtgebrauchslage in die Gebrauchslage mittleres und unteres Rahmenteil "von selbst" auseinander geschoben werden, sobald die Arretierung der beiden Rahmenteile zueinander gelöst wird. Hierdurch ergibt sich ein besonders hoher Bedienungskomfort.

Gemäß einer Weiterbildung der Erfindung ist die Gasfeder geschützt und in optisch ansprechender Weise im Inneren des mittleren Rahmenteils angeordnet.

Ein mögliches Ausführungsbeispiel der Erfindung ist in der Zeichnung dargestellt und wird nachfolgend näher erläutert. Es zeigt:
- Figur 1: einen erfindungsgemäßen Golfwagen in perspektivischer Ansicht, in seiner Gebrauchslage,
- Figur 2: eine der Figur 1 entsprechende Darstellung des Golfwagens, in seiner Nichtgebrauchslage,
- Figur 3: eine der Figur 1 entsprechende Darstellung des Golfwagens, aus einer anderen Blickrichtung,
- Figur 4: einen Längsschnitt durch die Rahmenteile und die Radführung des Golfwagens,
- Figur 5: eine Schnittdarstellung entsprechend der Schnittverlaufslinie V-V aus Figur 4 und
- Figur 6: eine Schnittdarstellung entsprechend der Schnittverlaufslinie VI-VI aus Figur 4.

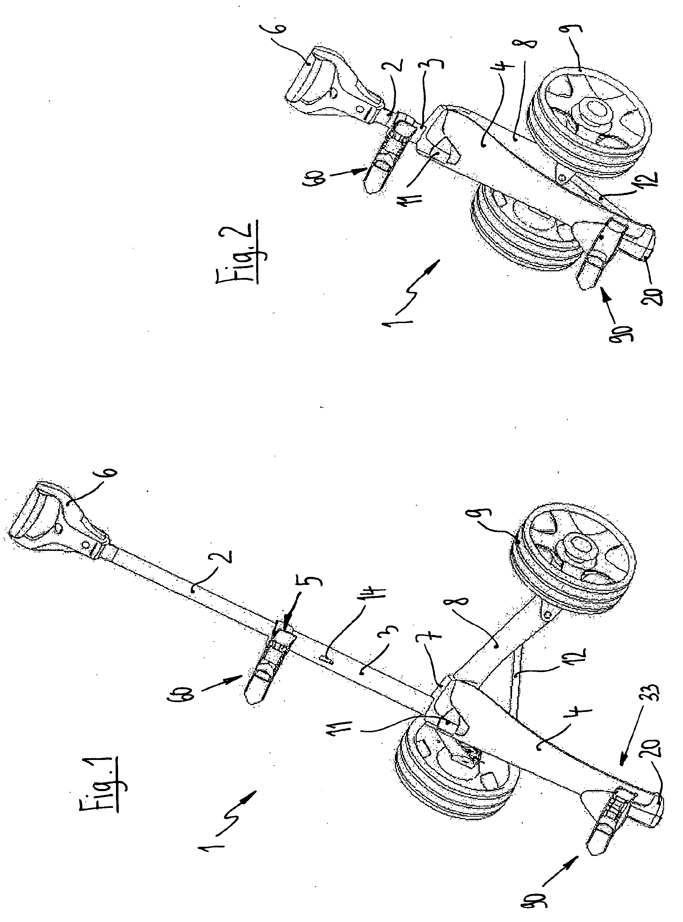

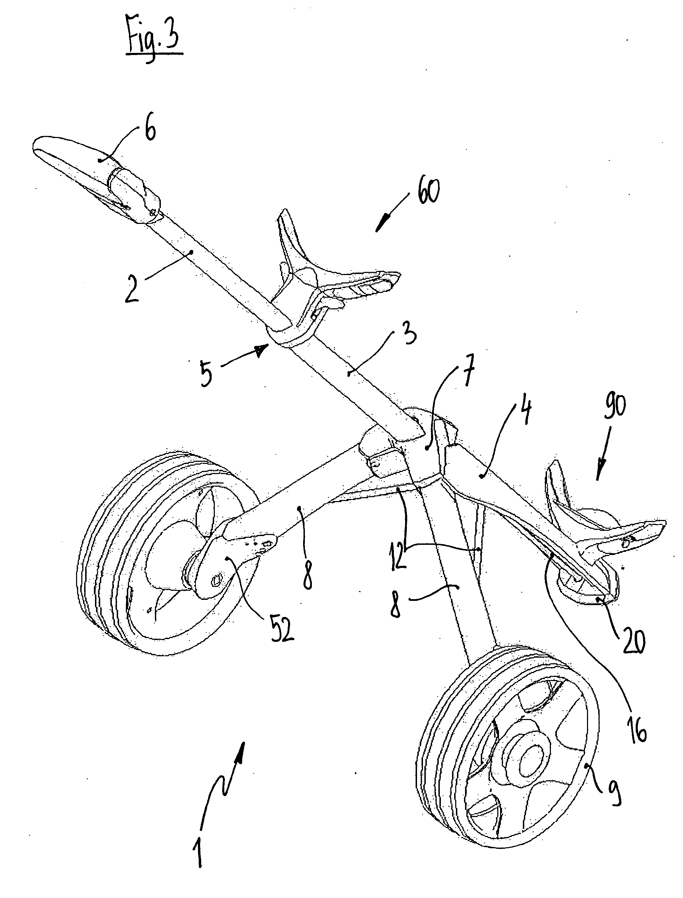

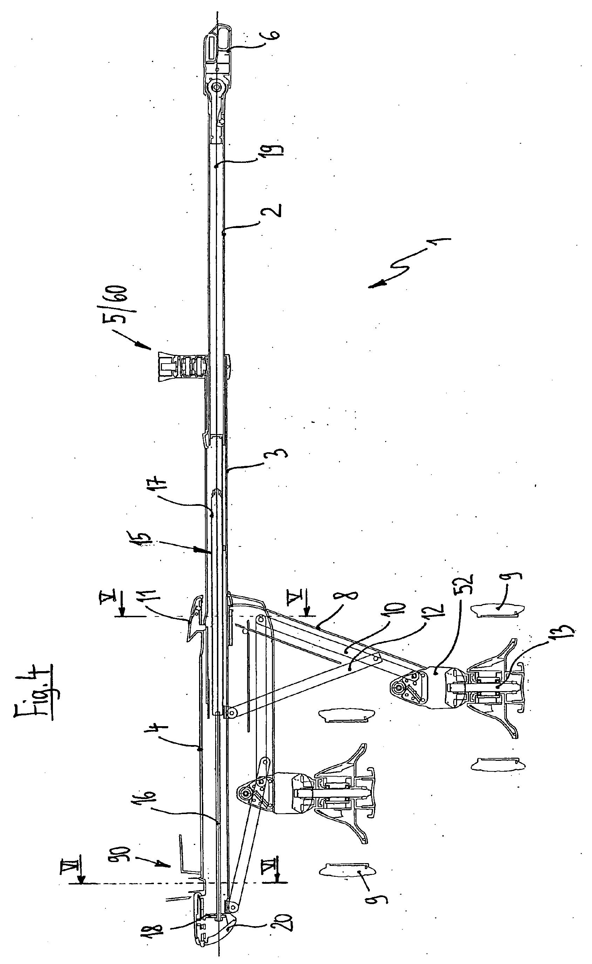

Die Figuren 1 bis 3 zeigen einen in seiner Gesamtheit mit 1 bezeichneten Golfwagen in perspektivischer Ansicht. Während die Figuren 1 und 3 den Golfwagen 1 in seiner Gebrauchslage zeigen, ist der Golfwagen 1 in Figur 2 in seiner Nichtgebrauchslage dargestellt, in der er mit kompakten Abmessungen zum Beispiel im Kofferraum eines Personenkraftwagens verstaut werden kann. Zum Verstauen können außerdem die Räder 9 des Golfwagens 1 in einfacher Weise abgenommen werden.

Die Räder 9 sind als reine Laufräder oder als angetriebene Räder ausgebildet. Im Fall angetriebener Räder 9 weisen diese bevorzugt Radnabenmotoren auf, mit in die Räder 9 integrierten Antriebsbatterien und einer drahtlosen Ansteuerung der Radnabenmotoren, wie in der EP 1 350 652 A2 beschrieben.

Zur Anbringung einer nicht dargestellten Golftasche am Golfwagen 1 ist eine obere und eine untere Halterung 60 bzw. 90 vorgesehen.

Der Golfwagen 1 setzt sich aus einem oberen, einem mittleren und einem unteren Rahmenteil 2 bzw. 3 bzw. 4 zusammen. Die Rahmenteile 2 bis 4 werden von Strangprofilen gebildet, wobei das obere und das untere Rahmenteil 2 bzw. 3 geschlossene Querschnitte aufweisen, die in Form und Dimension so bemessen sind, dass das obere Rahmenteil 2 in das mittlere Rahmenteil 3 einschiebbar ist. Die Arretierung der Rahmenteile 2 und 3 zueinander erfolgt durch eine stufenlos wirkende Klemmeinrichtung 5. Der freie Endabschnitt des oberen Rahmenteils 2 trägt einen Griff 6.

Mittleres und unteres Rahmenteil 3 bzw. 4 sind ineinander gesteckt, somit also teleskopartig ineinander zu schieben bzw. auseinander zu ziehen. Zur Festlegung der Gebrauchsstellung einerseits und der Nichtgebrauchsstellung andererseits sind zwei Arretiernasen vorgesehen, von denen lediglich die obere Arretiernase 14 am mittleren Rahmenteil 3 von außen sichtbar ist. Die Arretierung zwischen mittlerem und unterem Rahmenteil 3 bzw. 4 kann durch Betätigung eines Hebels 11, der am unteren Rahmenteil 4 angeordnet ist und mit den Arretiernasen zusammenwirkt, aufgehoben werden. Durch die untere Arretiernase wird insbesondere sichergestellt, dass die Räder 9 in der Gebrauchslage des Golfwagens 1 nicht einklappen können.

Im oberen Endbereich des unteren Rahmenteils 4 ist unter einer Abdeckung 21 ein Lagerbock 7 vorgesehen, der als Lagerung für zwei Querlenker 8 und zwei Parallellenker 10 dient, an deren Endabschnitten Radträger 52 mit Steckachsen 13 (siehe Figuren 3 und 4) für die Räder 9 vorgesehen sind. Die parallel angeordneten Querlenker 8 und Parallellenker 10 (siehe Figur 4) bewirken in Verbindung mit Dreieckslenkern 12, dass die Räder 9 beim Zusammenschieben des Golfwagens 1 parallel verschwenkt werden, somit dieselbe Ausrichtung aufweisen wie in ihrer Gebrauchslage.

Figur 4 ist ein Längsschnitt durch den Golfwagen 1, mit einem Schnittverlauf entlang der Längsachse 19 des Golfwagens 1 sowie entlang der Anbindung der Räder 9, die sowohl in der ausgeklappten als auch der eingeklappten Position dargestellt sind.

Wie insbesondere aus Figur 4 hervorgeht, ist im Inneren des mittleren Rahmenteils 3 eine Gasfeder 15 angeordnet, die die Überführung des Golfwagens 1 aus der Nichtgebrauchslage in die Gebrauchslage unterstützt. In der in Figur 4 dargestellten Position der Gasfeder 15 (Gebrauchslage des Golfwagens 1) ist die Kolbenstange 16 aus dem Zylinder 17 der Gasfeder 15 ausgefahren. Der Zylinder 17 der Gasfeder 15 stützt sich im oberen Bereich des mittleren Rahmenteils ab. Das freie Ende der Kolbenstange 16 ist an ein Abschlussteil 18 des unteren Rahmenteils 4 angebunden. Am unteren Endabschnitt 33 des unteren Rahmenteils 4 befindet sich ein Fußteil 20, das als Standfuß dient. Zusätzlich zum Fußteil 20 kann ein kleines Laufrad vorgesehen sein.

Zum Zusammenschieben des Golfwagens 1 muss die von der Gasfeder 15 erzeugte Druckkraft überwunden werden, um die Kolbenstange 16 in das Innere des Zylinders 17 einzuschieben. Hierzu muss der Nutzer des Golfwagens 1 in Richtung der Längsachse 19 des Golfwagens 1 eine Druckkraft aufbringen. Da sich der Golfwagen 1 hierbei über das Fußteil 20 am Boden abstützt, erfolgt die Einschubbewegung harmonisch und in ergonomisch günstiger Weise.

Umgekehrt muss der Nutzer zum Überführen des Golfwagens 1 von der Nichtgebrauchslage in die Gebrauchslage lediglich den Hebel 11 betätigen, um durch die unter Druck stehende Gasfeder 15 eine selbsttätige Ausschubbewegung auszulösen, durch die das mittlere Rahmenteil 3 aus dem Bereich des unteren Rahmenteils 4 herausgeschoben wird. Dabei klappen die Räder 9 parallel nach außen, bis sie die in den Figuren 1 und 3 dargestellte Position einnehmen.

Das untere Rahmenteil 4 ist ein Strangprofil, mit einem an der Unterseite offenen Querschnitt, das so beschnitten ist, dass sich die in den Figuren 1 bis 3 dargestellte äußere Form eines sich in Richtung des unteren Endabschnitts 33 verjüngenden Querschnitts ergibt.

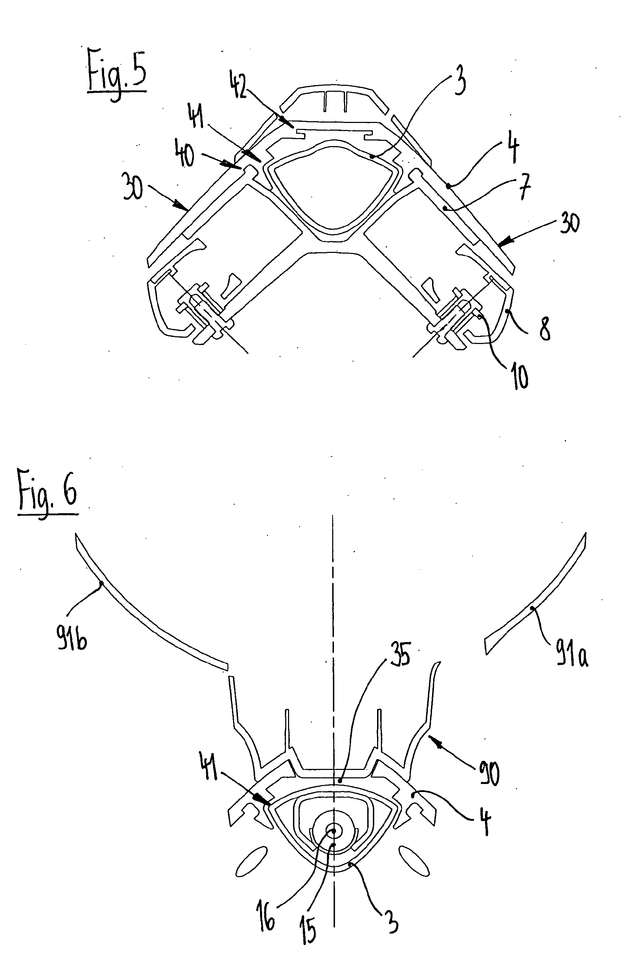

Wie aus den Schnittdarstellungen der Figuren 5 und 6 hervorgeht, ist die Unterseite des Strangprofils des unteren Rahmenteils 4 im Unterschied zur glattflächigen Oberseite 30 mit schienenartigen Führungen 40, 41 und 42 versehen. Die Führungen 40 dienen der Aufnahme des Lagerbockes 7, an dem die Querlenker 8 sowie die innenliegenden Parallellenker 10 angelenkt sind. Die schienenartigen Führungen 41 des unteren Rahmenteils 4 bilden eine Schiebeführung für das im Querschnitt etwa dreieckförmige mittlere Rahmenteil 3. Zur Herabsetzung der Reibung sind zwischen der Führung 41 des unteren Rahmenteils 4 und dem mittleren Rahmenteil 3 nicht dargestellte Gleitelemente aus einem Kunststoffmaterial vorgesehen. In die Führung 42 ist in nicht näher dargestellter Weise die Abdeckung 21 eingesteckt.

Figur 6 zeigt einen Schnitt durch das Strangprofil des unteren Rahmenteils 4 im Bereich seines unteren Endabschnittes 33. In eine Öffnung 35 ist hierbei die untere Halterung 90 für eine Golftasche, mit kreisbogenförmigen Anlageabschnitten 91 a und 91 b, eingesetzt. Wiederum gut zu erkennen ist die schienenartige Führung 41 für das mittlere Rahmenteil 3. Außerdem ist im Querschnitt die Kolbenstange 16 der Gasfeder 15 dargestellt, die die Ausschubbewegung bei der Überführung des Golfwagens 1 von der Nichtgebrauchslage in die Gebrauchslage unterstützt.

Der gesamte Offenbarungsgehalt der von der Anmelderin mit gleichem Anmeldetag eingereichten drei weiteren Anmeldungen mit dem Titel "Golfwagen" wird hiermit ausdrücklich und vollständig in die vorliegende Anmeldung einbezogen.

### Bezugszeichenliste

- 1: Golfwagen
- 2: oberes Rahmenteil
- 3: mittleres Rahmenteil
- 4: unteres Rahmenteil
- 5: Klemmeinrichtung
- 6: Griff
- 7: Lagerbock
- 8: Querlenker
- 9: Rad
- 10: Parallellenker
- 11: Hebel
- 12: Dreieckslenker
- 13: Steckachse
- 14: obere Arretiernase
- 15: Gasfeder
- 16: Kolbenstange
- 17: Zylinder
- 18: Abschlussteil
- 19: Längsachse
- 20: Fußteil
- 21: Abdeckung
- 30: Oberseite
- 33: unterer Endabschnitt
- 35: Öffnung
- 40: Führung
- 41: Führung
- 42: Führung
- 52: Radträger
- 60: obere Halterung
- 90: untere Halterung
- 91a: Anlageabschnitt
- 91b: Anlageabschnitt

## Patentansprüche

1. Golfwagen, mit
- einem oberen Rahmenteil, an dem ein Griff angeordnet ist,
- einem mittleren Rahmenteil,
- einem unteren Rahmenteil,
- wobei oberes und mittleres Rahmenteil teleskopartig zusammenschiebbar sind,
**dadurch gekennzeichnet, dass** das mittlere und das untere Rahmenteil (3 bzw. 4) teleskopartig zusammenschiebbar sind.

2. Golfwagen nach Anspruch 1,
**dadurch gekennzeichnet, dass** wenigstens eines der Rahmenteile (2, 3, 4) von einem Strangprofil gebildet wird.

3. Golfwagen nach Anspruch 2,
**dadurch gekennzeichnet, dass** das mittlere Rahmenteil (3) ein Strangprofil mit geschlossenem Querschnitt ist.

4. Strangprofil nach einem der vorgenannten Ansprüche,
**dadurch gekennzeichnet, dass** zwischen mittlerem und unterem Rahmenteil (3 bzw. 4) eine Hilfseinrichtung (15) zur Unterstützung der Ausschubbewegung zwischen mittlerem und unterem Rahmenteil (3 bzw. 4) vorgesehen ist.

5. Golfwagen nach Anspruch 4,
**dadurch gekennzeichnet, dass** die Hilfseinrichtung eine Gasdruckfeder (15) ist.

6. Golfwagen nach einem der Ansprüche 3 bis 5,
**dadurch gekennzeichnet, dass** die Hilfseinrichtung (15) im Inneren des mittleren Rahmenteils (3) angeordnet ist.
